# EUROPÄISCHE PATENTSCHRIFT

(11) **EP 0 974 809 B1**
(45) Veröffentlichungstag und Bekanntmachung des Hinweises auf die Patenterteilung: **18.09.2002**
(21) Anmeldenummer: 99112650.9
(22) Anmeldetag: 02.07.1999
(51) Int. Cl.: G01B 7/00

(54) **Verfahren zur Herstellung eines Positionssensors**
Method for manufacturing a position sensor
Méthode de fabrication d'un palpeur de position

(30) Priorität: 20.07.1998 DE 19832533
(43) Veröffentlichungstag der Anmeldung: 26.01.2000
(73) Patentinhaber: PEPPERL + FUCHS GMBH, D-68307 Mannheim (DE)
(72) Erfinder: Berg, Eckhard, 67269 Grünstadt (DE)
(74) Vertreter: Mierswa, Klaus, Dipl.-Ing.

(56) Entgegenhaltungen:
- DE-A- 4 023 792
- DE-A- 19 504 608
- DE-A- 19 745 537
- US-A- 5 684 407
- PATENT ABSTRACTS OF JAPAN vol. 012, no. 095 (P-681), 29. März 1988 (1988-03-29) & JP 62 229073 A (MITSUBISHI ELECTRIC CORP), 7. Oktober 1987 (1987-10-07)

## Beschreibung

### Technisches Gebiet:

Die Erfindung betrifft ein Verfahren zur Herstellung eines Positionssensors, umfassend eine auf einer Platine angeordnete elektrische Schaltung, ein Sensorelement sowie ein elektrisches Anschlußelement zum Zuführen von elektrischer Energie und Herausführen der Signale des Sensorelements, sowie einen dergestalt hergestellten Positionssensor.

### Stand der Technik:

Durch die DE-A-195 04 608 ist ein Positionssensor und ein Verfahren zur Herstellung desselben gemäß dem Oberbegriff des Anspruchs 1 bekannt geworden. Der Positionssensor ist in ein Gehäuse eingebaut, welches zur Herstellung des Positionssensors die auf einem Träger angeordnete elektrische Schaltung sowie das Sensorelement aufnimmt. Das eine Ende des Gehäuses birgt das Sensorelement, auf das andere Ende des Gehäuses ist ein Anschlußelement montiert. Die Zwischenräume zwischen dem Gehäuse, dem Träger mit der elektrischen Schaltung, dem Sensorelement und dem Anschlußelement sind mit einer Duroplast-Formmasse ausgefüllt, so daß das Gehäuse somit die Form des Positionssensors darstellt.

Durch die DE-C-195 44 815 ist ein ähnlicher Sensor mit einer auf einem Träger angeordneten elektrischen Schaltung bekannt geworden, welche mit einem elektrischen Anschlußelement und einem Sensorelement verbunden ist; diese Teile des Sensors sind in einem Gehäuse angeordnet. Das Sensorelement und ein erster Teil des Trägers sind in eine Duroplast-Formmasse eingebettet, ein zweiter Teil des Trägers und das Anschlußelement sind von einer Thermoplast-Formmasse umschlossen.

Das zur Herstellung der vorstehend genannten Positionssensoren benötigte Gehäuse gestaltet die Herstellung derartiger Sensoren aufwendig und teuer. Bei der Verwendung eines Gehäuses ist trotz aller Sorgfalt ein hermetisches Vergießen der Teile des Sensors nicht immer gewährleistet, so daß es, schon aufgrund von unterschiedlichen Ausdehnungskoeffizienten der beteiligten Materialien, bei der Verwendung eines solchen Sensors in Bereichen mit hohen Umgebungsdrücken und eventuell zusätzlich hoher Luftfeuchtigkeit zum Eindringen von Feuchtigkeit und Gas in den Sensor zwischen Gehäusewand und Formmasse und zu Ausfällen wegen Feuchtigkeitskriechstrecken kommen kann. Auch ist die Verwendung zweier unterschiedlicher Formmassen nachteilig, da hierbei bei der Herstellung zwei unterschiedliche Spritzgießschritte durchgeführt und damit erhöhte Sicherheitsvorkehrungen getroffen werden müssen.

Durch die DE-A 40 23 792 ist ein Näherungsschalter mit einer Befestigungshülse und mit darin in Kunststoff eingebetteten, auf einer Platine gehaltenen Bauteilen einschließlich eines Sensors bekannt geworden. Der an der Platine gehaltene Sensor ist in einen Topf eingegossen und als mit der mit dem Anschlußkabel verbundenen Platine in einer Gießform umgossenen oder umspritzten Einheit in der Befestigungshülse gehalten. Die Einheit ist über einen mit der Einheit und der Befestigungshülse verrasteten das Kabel umgreifenden Deckel in der Befestigungshülse gehalten. Die bestückte Leiterplatte mit dem Topf und dem Kabel wird in der Spritzgießform zu einer Einheit mittels der Spritzgießmasse vereint, wobei die umspritzte Einheit in eine Befestigungshülse eingeschoben ist, die vorzugsweise ein mit einem Gewinde versehenes Gewinderohr ist.

### Technische Aufgabe:

Der Erfindung liegt die Aufgabe zugrunde, ein Verfahren zur Herstellung eines Positionssensors und einen dergestalt hergestellten Positionssensor der genannten Gattung zu schaffen, welcher in einfacher Weise ohne Gehäuse hergestellt werden kann, dessen Herstellung durch die Verwendung von nur einer einzigen Formmasse weniger aufwendig und damit preiswerter ist, als es für vergleichbare Sensoren des Standes der Technik der Fall ist. Insbesondere soll ein derartiger Sensor für den Einsatz bei hohen Umgebungsdrücken und eventuell zusätzlich hoher Luftfeuchtigkeit sein.

### Offenbarung der Erfindung und deren Vorteile:

Die Lösung der Aufgabe ist verfahrensgemäß gekennzeichnet durch die folgenden Schritte: gekennzeichnet durch die folgenden Schritte:
a) Aufsetzen des Sensorelements auf einen Sensorelementträger, welcher wenigstens einen abstehende Flügel aufweist, b) Aufsetzen des Sensorelementträgers mitsamt dem Sensorelement auf die Platine und elektrisches Verbinden des Sensorelements sowie des Anschlußelements mit der Platine, c) Positionieren des Sensorelementträgers mitsamt der Platine in einer mehrteiligen Form, deren Formvolumen die Außenmaße des Positionssensors aufweist, dabei c1) Positionieren des bzw. der Flügel des Sensorelementträgers in entsprechend der Flügel geformte Aussparungen der Form, die das Formvolumen der Form überragen und somit Positionieren des Sensorelementträgers mitsamt dem Sensorelement und der Platine in der Form, d) Positionieren des Anschlußelements innerhalb der Form in einer dafür vorgesehenen Aussparung der Form, e) Ausspritzen der Form mittels einer duroplastischen Formmasse, wobei die Platine, das Sensorelement und der Sensorelementträger vollständig, das Anschlußelements wenigstens teilweise von der Formmasse umhüllt werden mit Ausnahme des bzw. der Flügel, f) Entnahme des Positionssensors nach dem Erhärten der Formmasse aus der Form, g) Entfernen des bzw. der aus der Formmasse abstehenden Flügel des Sensorelementträgers.

Der Vorteil des Verfahrens besteht darin, daß ein dergestalt hergestellter Positionssensor kein separates Gehäuse mehr aufweist, sondern die nach dem Erhärten der duroplastischen Formmasse entstehende Umhüllung der Teile des Positionssensors gleichzeitig dessen Gehäuse darstellt. Es ist somit vorteilhaft möglich, auch das eigentliche Sensorelement vollständig von der duroplastischen Formmasse zu umschließen, ohne in irgend einer Weise eine irgendwie geartete Dichtung vorsehen zu müssen. In vorteilhafter Weise kann deshalb auch nur eine Formmasse, nämlich eine duroplastische Formmasse, verwendet werden, die Verwendung zweier unterschiedlicher Formmassen entfällt. Dadurch ist das Herstellungsverfahren vereinfacht; ebenso ist ein derartiger Sensor preiswerter herzustellen, als vergleichbare Sensoren des Standes der Technik. Insbesondere ist ein derartiger Positionssensor in Umgebungen mit hohen Drücken und/oder mit hoher Luftfeuchtigkeit einsetzbar, weil der Sensor durch die Formmasse hermetisch abgedichtet ist. Denn ein entscheidender Vorteil eines derartig hergestellten Sensors liegt darin, daß auch bei einer Wärmeausdehnung der Platine mit den darauf befindlichen elektrischen Bauteilen die umgebende duroplastische Formmasse nicht undicht wird. Die Positionierung des Sensorelements bzw. der Spule auf dem Sensorelementträger bzw. Spulenträger stellt sicher, daß das Sensorelement unter Einhaltung von geringen Toleranzen umhüllt werden kann.

Vorteilhaft kann die Innenseite der Form in weiten Teilen eine praktisch beliebige Formgebung aufweisen, so auch eine Gewindeform, so daß beim Preßvorgang in die Oberfläche der Formmasse des Positionssensors ein Gewinde eingepreßt wird.

Ein Positionssensor , umfassend eine auf einer Platine angeordnete elektrische Schaltung, welche mit einem Sensorelement elektrisch verbunden ist sowie ein mit der Platine verbundenes elektrisches Anschlußelement aufweist zum Zuführen von elektrischer Energie und Herausführen der Signale des Sensorelements, ist dadurch gekennzeichnet, dass das Sensorelement auf einem Sensorelementträger angeordnet ist, welcher wenigstens einen abstehenden Flügel aufweist, und der Sensorelementträger mit der Platine verbunden ist und diese an einem Ende haltert, und Platine, Sensorelement und Sensorelementträger vollständig sowie das Anschlußelement wenigstens teilweise von einer duroplastischen Formmasse gehäuselos umhüllt sind, aus der unmittelbar nach der Fertigstellung der bzw. die Flügel hervorstehen, welche anschließend entfernbar sind.

Der erfindungsgemäße Positionssensor kann praktisch als beliebiger Positionssensor ausgeführt sein, wie als induktiver oder kapazitiver oder optischer oder auf Druck ansprechender Sensor.

Bei der Herstellung eines zylindrischen Positionssensors mit einem Kabel zum Zuführen von elektrischer Energie und Herausführen der Signale des Sensorelements umschließt die Form ein zylindrisches Volumen, so daß beim Preßvorgang ein zylindrischer Positionssensors erzeugt wird, von dem die Flügel des Sensorelementträgers radial abstehen, wobei innerhalb der Form an einem Ende der Platine der Sensorelementträger mitsamt dem Sensorelement und am entgegengesetzten Ende das Anschlußelement positioniert werden, welches auf das wegführende Kabel aufgesetzt ist.

Die elektrische Versorgungsenergie des Positionssensors und die abgehenden Daten des Sensorelements können entweder galvanisch mittels eines Kabels oder einer Steckverbindung oder als von einem elektromagnetischen Empfänger aufgenommener elektromagnetischer Strahlungsenergie und von einem Sender abgegebener Daten in Form von elektromagnetischer Strahlung übermittelt werden.

Vorteilhaft wird bei der Herstellung des Positionssensors die duroplastische Formmasse in einem Arbeitsgang einstückig in die Form gespritzt. Dabei kann vorteilhaft zuerst die Platine auf den Sensorelementträger mitsamt dem Sensorelement aufgesetzt sowie das Anschlußelements an der Platine montiert werden, anschließend wird diese Einheit aus Platine, Sensorelementträger, Sensorelement und Anschlußelement in der Form positioniert, anschließend erfolgt der Spritzvorgang mit der duroplastischen Formmasse in die Form.

Ein nach dem erfindungsgemäßen Verfahren hergestellter Positionssensor umfaßt eine auf einer Platine angeordnete elektrische Schaltung, welche mit einem Sensorelement elektrisch verbunden ist sowie ein mit der Platine verbundenes elektrisches Anschlußelement zum Zuführen von elektrischer Energie und Herausführen der Signale des Sensorelements. Das Sensorelement ist auf einem Sensorelementträger angeordnet, welcher wenigstens einen abstehenden Flügel aufweist, wobei der Sensorelementträger mit der Platine verbunden ist und diese an einem Ende haltert; Platine, Sensorelement und Sensorelementträger sind vollständig sowie das Anschlußelement wenigstens teilweise von einer duroplastischen Formmasse gehäuselos umhüllt, aus der unmittelbar nach der Fertigstellung der bzw. die Flügel hervorstehen, welche anschließend entfernbar ist.

Der Sensorelementträger ist als runde Scheibe gestaltet und besitzt auf einer der Hauptoberflächen eine peripher umlaufende Ringwandung sowie auf dieser Hauptoberfläche zentrisch einen Mittenzapfen zur Aufnahme und Zentrierung einer Spule des Sensorelements; auf der gegenüberliegenden Hauptoberfläche sind Halterungselemente zur Halterung der Platine während des Preßvorganges der duroplastischen Formmasse innerhalb der Form angeordnet.

Der Dichtkörper kann aus einem transluziden Material bestehen und ein nach innen weisendes Sackloch aufweisen, in welches eine Leuchtdiode eingesetzt ist, welche mit der Platine elektrisch in Verbindung steht. Dadurch ist vorteilhaft ein optisches Signal am Positionssensor ablesbar.

Zur sicheren Halterung der Platine während des Spritzvorgangs kann auch das Anschlußelement bzw. der Dichtkörper Halterungen aufweisen, zwischen denen die Platine mittels gesteckter Verbindung während des Preßvorganges der duroplastischen Formmasse innerhalb der Form gehaltert ist. Die Flügel, vorzugsweise zwei Flügel, des Sensorelementträger stehen radial nach außen ab und weisen Sollbruchstellen auf, an denen die Flügel nach dem Erstarren der Formmasse abgebrochen werden.

Der Positionssensor ist somit gehäuselos ausgeführt, wobei die gemeinsame Umhüllung der Platine, des Sensorelements, des Sensorelementträgers und des Anschlußelements aus ein- und derselben duroplastischen Formmasse besteht, welche mittels einer Form, in die die Teile des Positionssensors positionierbar sind, um die Teile des Positionssensors gespritzt ist und welche die Teile des Positionssensors ganz bzw. wenigstens teilweise umhüllt; die duroplastische Formmasse ist somit einstückig ausgeführt.

Ebenso ist es vorteilhaft, daß die Platine bzw. der Träger aus dem gleichen Material besteht wie die Umhüllung selbst, weil dadurch ein guter Materialverbund zwischen Platine bzw. Träger und der duroplastischen Formmasse erreicht wird. Daneben ist dadurch der gleiche Längenausdehnungskoeffizient bezüglich der Platine und der duroplastischen Umhüllung gegeben, so daß thermische Ausdehnungen der Platine und der Umhüllung aus der duroplastischen Formmasse optimal aneinander angepaßt sind.

Kurzbezeichnung der Zeichnung, in der zeigen:
- Figur 1: einen Längsschnitt durch einen zylinderförmigen Sensor mit Spule, Spulenträger, Platine und Dichtkörper, wobei die Längsachse des Sensors in der Schnittebene liegt, mit abgehendem Kabel
- Figur 2: eine Längsansicht des Sensors in Figur 1
- Figur 3: eine Stirnansicht des Sensors in Figur 1
- Figur 4: eine Draufsicht auf den Sensor und den Dichtkörper in Figur 1
- Figur 5: eine um 90 Grad nach unten geklappte Ansicht der Figur 4
- Figur 6: eine Draufsicht auf den Spulenträger des Sensors der Figur 1 mit einstückig angeformten Flügeln mit Sollbruchstellen
- Figur 7: einen nach links um 90 Grad geklappten Mittenschnitt durch den Spulenträger der Figur 6
- Figur 8: eine um 90 Grad nach unten geklappte Ansicht der Figur 6
- Figur 9: eine um 90 Grad nach links geklappte Ansicht der Figur 7
- Figur 10: eine Draufsicht auf die im Sensor liegende Stirnseite des Dichtkörpers
- Figur 11: einen Schnitt durch den Dichtkörper der Figur 10, wobei die Längsachse des Dichtkörpers in der Schnittebene liegt
- Figur 12: einen weiteren quaderförmigen Sensor
- Figur 13: eine Draufsicht auf eine Herstellungsform des Sensors der Figur 12 mit in die Form eingelegtem Sensor
- Figur 14: einen Längsschnitt durch den Sensor der Figur 12 und
- Figur 15: ein Werkzeugunterteil in perspektivischer Darstellung als Teil einer mehrteiligen Form mit Aussparungen innerhalb des Werkzeugunterteils entsprechend der Gestaltung des herzustellenden Sensors,

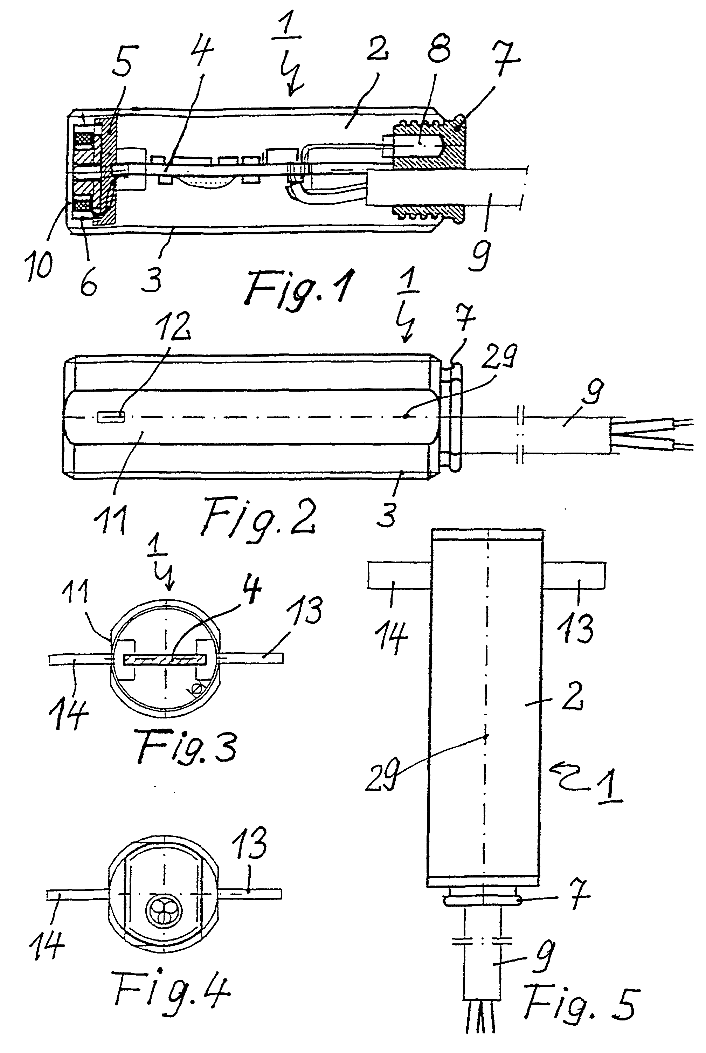

Ein Beispiel eines induktiv arbeitenden Positionssensors 1 ist in den Figuren 1 bis 10 gezeigt, wobei in Figur 1 ein beispielsweise zylinderförmiger Positionssensor 1 in einem Längsschnitt abgebildet ist, dessen Teile vollständig bzw. wenigstens teilweise von einer duroplastischen Formmasse 2 umhüllt sind. Der Positionssensor 1 wird gebildet aus einer flächig-länglichen Platine 4 als Träger von darauf montierten elektrischen Bauelementen, wobei sich die Platine 4 in Längsrichtung der Längsachse des Positionssensors 1 sowie quer dazu in Richtung eines Durchmessers erstreckt; die Breite der Platine 4 ist allerdings geringer als der Durchmesser des Positionssensors 1, so daß auch die Seitenränder der Platine 4 von Formmasse vollständig umschlossen sind.

Am vorderen Ende der Platine 4, welches in der Zeichnung das linke Ende darstellt, ist ein Sensorelementträger 5 angeordnet, welcher im gezeigten Beispiel ein Spulenträger 5 ist, der eine Spule 6 trägt, die elektrisch mit den Bauelementen der Platine 4 verbunden ist. Auf das entgegengesetzte Ende der Platine 4 ist als Anschlußelement ein Dichtkörper 7 aufgesetzt, welcher die elektrische Verbindung des Positionssensors 1 mit der Umgebung bewerkstelligt. Dazu ist durch den Dichtkörper 7 ein innerhalb des Dichtkörpers 9 abgedichtetes elektrisches Kabel 9 geleitet zur Zuführung von elektrischer Energie für den Positionssensor 1 und zur Weiterleitung der Daten desselben an eine nicht gezeigte Verarbeitungsstation. Spulenträger 5 und Dichtkörper 7 weisen einen geringeren Durchmesser als der fertige Positionssensor 1 auf, so daß die peripheren Umfänge von Spulenträger 5 und Dichtkörper 7 von der duroplastischen Formmasse umgeben sind. Lediglich die vom Inneren des Positionssensors 1 abgewandte Stirnseite des Dichtkörpers 7 ist nicht von der Formmasse umgeben, sondern ragt aus dieser hervor. Auch das eigentliche Sensorelement, Spule 6 mit Spulenkern, ist auf seiner aktiven Fläche, die die eine Stirnfläche des Positionssensors 1 darstellt, mit einer Schicht 10 aus duroplastischer Formmasse überdeckt. In die äußere Manteloberfläche des Positionssensors 1 ist ein Gewinde 3 eingeprägt.

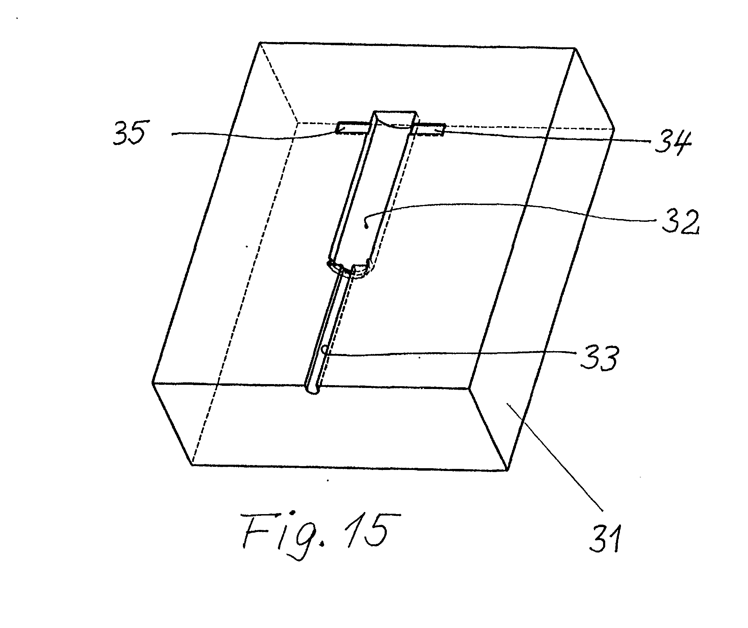

Zur Herstellung des Positionssensors 1 wird eine vorzugsweise mehrteilige Form 31 verwendet, wobei das Werkzeugunterteil 31 der Form 31 in Figur 15 gezeigt ist. Innerhalb der Form 31 wird die Umhüllung aus der duroplastischen Formmasse mittels Spritzgieß- bzw. Kunststoffpreßtechniken gespritzt. Das Formvolumen der Form 31 weist die Außenmaße des Positionssensors 1 auf, wie diese auch auf der Innenseite besondere Oberflächengestaltungen aufweisen kann, um beispielsweise ein Gewinde 3 des Positionssensors 1 zu prägen. Ebenso können Abflachungen 11 der Mantelwandung des Positionssensors 1, beispielsweise Schlüsselflächen, dergestalt vorgegeben werden.

Dazu wird das Sensorelement 6, Spule 6, auf den Spulenträger 5 aufgesetzt, welcher gemäß der Figuren 3, 4 und 5 zwei radial in Richtung eines Durchmessers abstehende Flügel 13,14 aufweist. Der Spulenträger 5 mitsamt dem Sensorelement 6 wird auf die Platine 4 aufgesetzt und sämtliche elektrischen Bauelemente in der vorgesehenen Weise elektrisch miteinander verbunden einschließlich der Verbindung des Kabels 9 an die Platine 4. Der Dichtkörper 7 wird auf dem anderen Ende der Platine 4 angeordnet, wobei das Kabel 9 durch den Dichtkörper 7 durchgeführt und mit der Platine leitend verbunden ist. Des Weiteren kann eine Leuchtdiode 8 mit der Platine 4 elektrisch verbunden sein, wobei die Leuchtdiode 8 in einem Sackloch 23 (Figur 11) des Dichtkörpers 7 angeordnet ist, ohne diesen vollständig zu durchsetzen. Dazu kann der Dichtkörper 7 aus einem transluziden Kunststoff bestehen, damit das Licht der Leuchtdiode durch den Dichtkörper 7 optisch sichtbar ist. Nach dem Zusammenfügen der elektrischen Teile 4, 5, 6, 7 8 und 9 ist diese so bezeichnete elektrische Schaltung fertig präpariert, um in der Form mittels der Formmasse umspritzt zu werden.

Zur Halterung der elektrischen Schaltung innerhalb der Form dienen die beiden Flügel 13, 14, welche beim Positionieren der elektrischen Schaltung innerhalb der Form in entsprechende Aussparungen derselben zu liegen kommen und somit das vordere Ende der elektrischen Schaltung in definierter Weise abstützen. Damit überragen die Flügel 13, 14 das Formvolumen der Form. Das entgegengesetzte Ende der elektrischen Schaltung wird durch den Dichtkörper 7 definiert positioniert, welcher ja wenigstens teilweise aus dem fertigen Positionssensor 1 und somit aus der Form herausragt bzw. an seinem Ende geeignet in der Form abgestützt ist. Nunmehr wird die Form mittels einer duroplastischen Formmasse 2 ausgespritzt, wobei die Platine 4, das Sensorelement 6 und der Spulenträger 5 vollständig, der Dichtkörper 7 wenigstens teilweise von der Formmasse 2 umhüllt werden mit Ausnahme der Flügel 13,14. Nach dem Erhärten der Formmasse 2 wird der Positionssensor 1 aus der Form genommen. Die beiden Flügel 13, 14 stehen danach radial aus der die elektrische Schaltung umhüllenden Formmasse 2 ab und werden entfernt, beispielsweise abgebrochen. Diese Stellen sind am fertigen Positionssensor 1 als Bruchstellen 12 zu sehen (Fig. 2).

Auf diese Weise kann eine Form ein zylindrisches Volumen umschließen, so daß beim Preßvorgang ein zylindrischer Positionssensors 1 erzeugt wird, von dem die Flügel 13,14 des Sensorelementträgers 5 radial abstehen, welche anschließend weggebrochen werden.

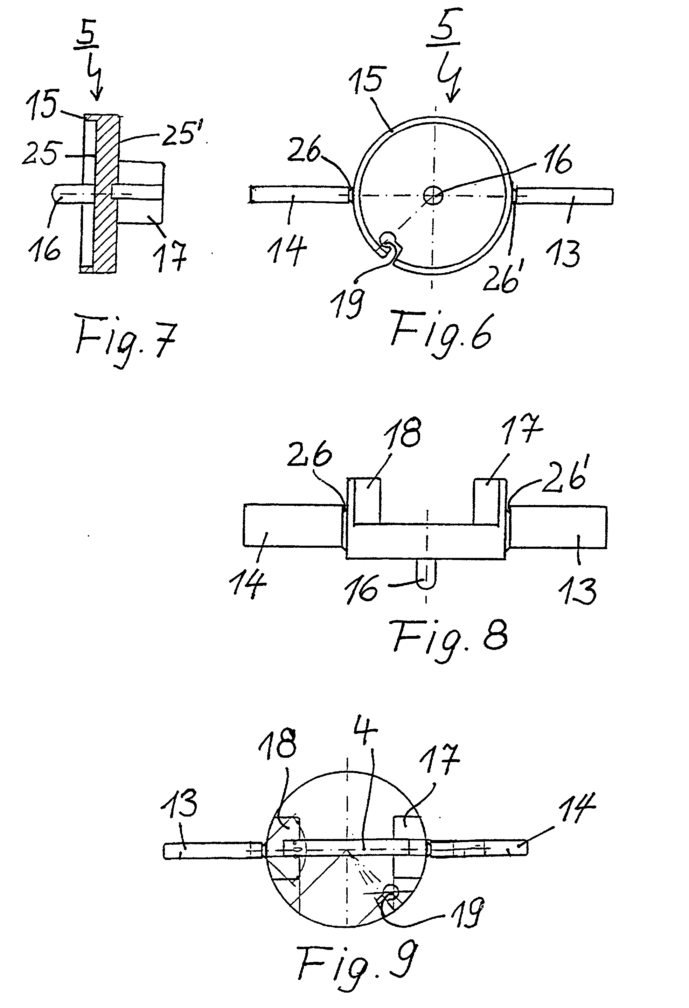

Die Figur 6 bis 9 zeigen die Gestaltung des Spulenträgers 5, welcher als runde Scheibe gestaltet ist und auf einer der Hauptoberflächen 25 sowohl eine peripher umlaufende Ringwandung 15 als auch zentrisch einen Mittenzapfen 16 zur Aufnahme und Zentrierung einer Spule 6 des Sensorelements aufweist, wobei auf der gegenüberliegenden Hauptoberfläche 25' Halterungselemente 17,18 zur Halterung der Platine 4 während des Preßvorganges der duroplastischen Formmasse 2 innerhalb der Form angeordnet sind. Das Ende der Platine 4 wird zwischen die Halterungselemente 17,18 geschoben und dazwischen fixiert, wie es in Figur 9 gezeigt ist. Außerdem weist der Spulenträger 5 peripher ein Durchführungsloch 19 auf zur Durchführung der Drahtanschlüsse der Spule 6 durch den Spulenträger 5 hin zur Platine 4 innerhalb der Form. Die beiden Flügel 13, 14 stehen vom Spulenträger 5 radial in Richtung eines Durchmessers des Spulenträgers 5 ab. Die Flügel 13, 14 weisen in Nachbarschaft mit der Ringwandung 15 Sollbruchstellen 26, 26' auf, an denen nach der Fertigstellung der Umhüllung aus der duroplastischen Formmasse 2 um die gesamte elektrische Schaltung die Flügel 13, 14 abgebrochen werden, so daß die Bruchstellen 12 in Figur 2 entstehen.

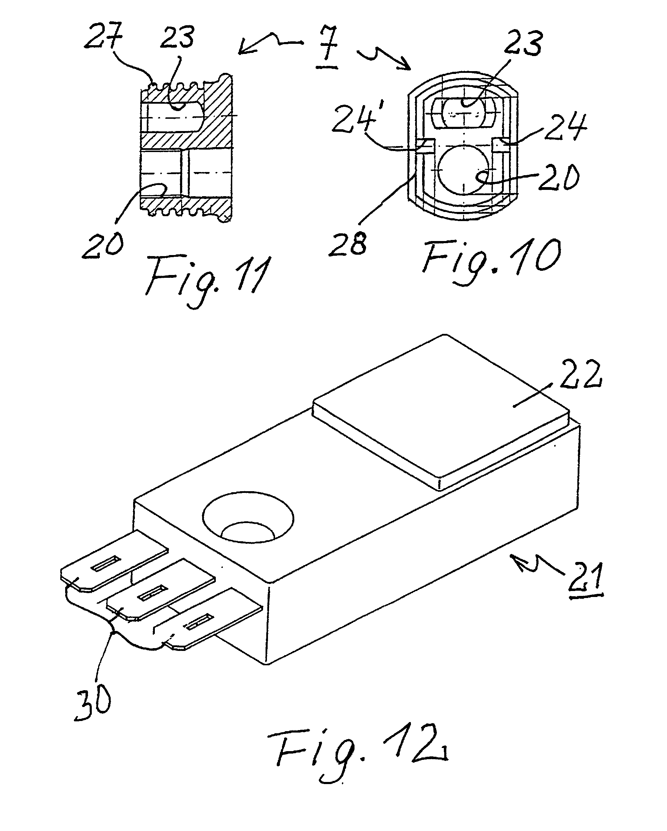

Die Figuren 10 und 11 zeigen die Gestaltung des Anschlußelements 7 zum Zuführen von elektrischer Energie und Herausführen der Signale des Sensorelements 6 aus dem Positionssensor in Form eines Dichtkörpers 7, der das hintere Ende des Positionssensors 1 gemäß Figur 1 bildet. Der Dichtkörper 7 ist rund mit abgeflachten Seitenwangen 28 sowie umlaufenden Rillen 27, welche beim Ausspritzen mit der duroplastischen Formmasse 2 eine hermetische Dichtigkeit des Dichtkörpers 7 innerhalb der Formmasse 2 gewährleisten. Innerhalb des Dichtkörpers 7 ist in Richtung der Achse desselben bzw. in Richtung der Längsachse 29 des Positionssensors 1 ein Durchgangsloch 20 sowie ein Sacklock 23 vorgesehen. Ersteres dient zum Durchführen des Kabels 9 in Figur 1, Letzteres dient zum Einstecken der Leuchtdiode 8 in Figur 1, weshalb in diesem Fall der Dichtkörper 7 entweder aus einem transluziden Kunststoff besteht oder wenigstens oberhalb der Leuchtdiode 8 ein transluzides Fenster besitzt. Des Weiteren weist der Dichtkörper 7 in seiner nach innen weisenden Stirnfläche sich gegenüberstehende Aussparungen 24, 24' auf, in die das zugewandte und entsprechend geformte Ende der Platine 4 gesteckt wird und dergestalt innerhalb des Dichtkörpers 7 gehaltert ist.

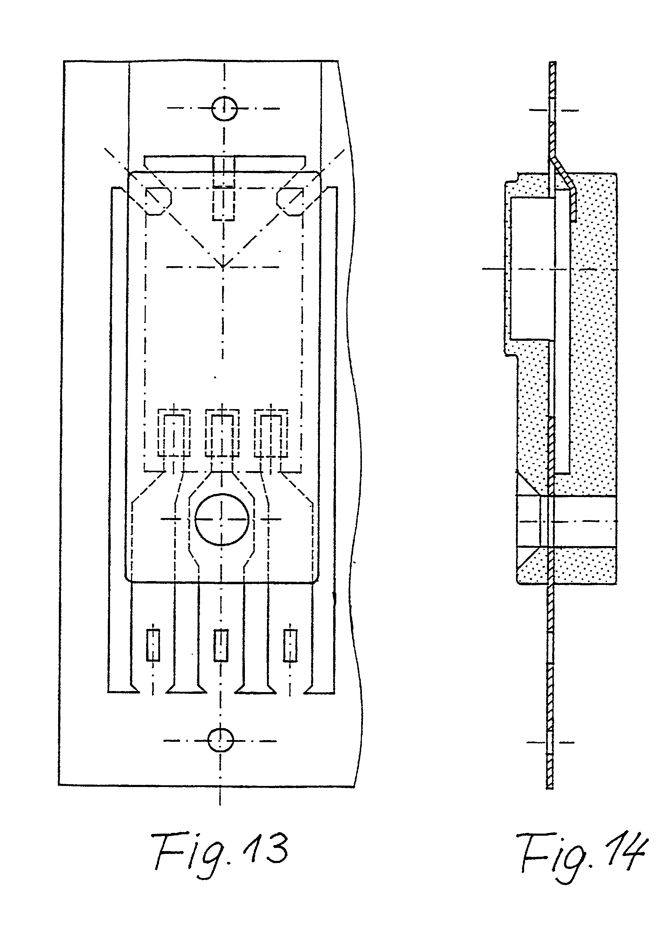

Die Figuren 12 bis 14 zeigen ein weiteres Beispiel eines gehäuselosen Positionssensors 21, welcher einstückig vollständig von einer duroplastischen Formmasse umhüllt ist, aus der nur metallische Anschlüsse 30 herausragen. Auch bei diesem Positionssensor 21 ist die aktive Fläche 22 eines darunter befindlichen Sensorelements mit duroplastischen Formmasse überzogen.

Figur 15 zeigt ein quaderförmiges Werkzeug-Unterteil 31 einer mehrteiligen Form 31 zur Herstellung des Positionssensors 1; das Oberteil, welches identisch bzw. fast identisch geformt ist, ist nicht dargestellt. Das Werkzeug-Unterteil 31 weist eine Mehrzahl von Aussparungen oder Vertiefungen 32, 33, 34, 35 auf, welche zur Ausgestaltung des Sensors 1 dienen. Die Aussparung 32, welche vorzugsweise zylindrisch gestaltet ist und in der Mantelwandung ein (nicht gezeigtes) Gewinde aufweist, bildet den Korpus des Positionssensors 1 aus. Die Aussparungen 34, 35 dienen zum Einlegen der Flügel 13, 14 zur Positionierung der elektrischen Schaltung bei der Herstellung des Sensors 1. Die Aussparung 33 innerhalb des Werkzeug-Unterteils 31 dient zum Einlegen der Anschlußkabel 9. Nachdem sämtliche inneren Teile des herzustellenden Sensors 1 im Werkzeug-Unterteil 31 wie vorgesehen plaziert sind, wird das Werkzeug-Unterteil 31 mit dem Werkzeug-Oberteil verschlossen und die Form ausgespritzt.

### Gewerbliche Anwendbar keit:

Das erfindungsgemäße Verfahren ist besonders zur Herstellung von metallgehäuselosen Sensoren geeignet, deren Kunststoffumhüllung ein Gehäuse ersetzt. Derartige erfindungsgemäße Positionssensoren, bei denen die Kunststoffumhüllung das Gehäuse ersetzt, sind vielfältig einsetzbar, wie in der Sensortechnik, Meßtechnik und Meßwerterfassung, Industrieautomation wie auch Fabrikautomation.

### Liste der Bezugszeichen:

- 1: zylinderförmiger Sensor
- 2: duroplastische Formmasse
- 3: Gewinde des Sensors 1
- 4: Platine
- 5: Spulenträger
- 6: Spule
- 7: Dichtkörper
- 8: Leuchtdiode
- 9: Kabel
- 10: Stirnfläche
- 11: Abflachung
- 12: Bruchstelle der Flügel 13, 14
- 13, 14: Flügel
- 15: Ringwandung
- 16: Mittenzapfen
- 17, 18: Halteteile
- 19: Durchführungsloch
- 20: Durchgangsloch durch den Dichtkörper 7
- 21: kubischer Sensor
- 22: aktive Sensorfläche
- 23: Sackloch innerhalb des Dichtkörpers 7
- 24, 24': Aussparungen
- 25, 25': Hauptoberflächen des Spulenträgers
- 26, 26': Sollbruchstellen
- 27: Rillen des Dichtkörpers
- 28: Seitenwangen
- 29: Längsachse des Positionssensors
- 30: Anschlüsse
- 31: Werkzeug-Unterteil einer mehrteiligen Form
- 32, 33, 34, 35: Aussparungen innerhalb des Werkzeug-Unterteils

## Patentansprüche

1. Verfahren zur Herstellung eines Positionssensors (1,21), umfassend eine auf einer Platine (4) angeordnete elektrische Schaltung, ein Sensorelement (6) sowie ein elektrisches Anschlußelement (7,8,9) zum Zuführen von elektrischer Energie und Herausführen der Signale des Sensorelements (6),
**gekennzeichnet durch** die folgenden Schritte:
a) Aufsetzen des Sensorelements (6) auf einen Sensorelementträger (5), welcher wenigstens einen abstehenden Flügel (13,14) aufweist
b) Aufsetzen des Sensorelementträgers (5) mitsamt dem Sensorelement (6) auf die Platine (4) und elektrisches Verbinden des Sensorelements (6) sowie des Anschlußelements (7,8,9) mit der Platine (4)
c) Positionieren des Sensorelementträgers (5) mitsamt der Platine (4) in einer mehrteiligen Form (31), deren Formvolumen (32,33,34,35) die Außenmaße des Positionssensors (1,21) aufweist, dabei
c1) Positionieren des bzw. der Flügel (13,14) des Sensorelementträgers (5) in entsprechend der Flügel (13,14) geformte Aussparungen (34,35) der Form, die das Formvolumen (32) der Form (31) überragen und somit Positionieren des Sensorelementträgers (5) mitsamt dem Sensorelement (6) und der Platine (4) in der Form (31)
d) Positionieren des Anschlußelements (7,8,9) innerhalb der Form (31) in einer dafür vorgesehenen Aussparung (33) der Form (31)
e) Ausspritzen der Form (31) mittels einer duroplastischen Formmasse (2), wobei die Platine (4), das Sensorelement (6) und der Sensorelementträger (5) vollständig, das Anschlußelements (7,8,9) wenigstens teilweise von der Formmasse (2) umhüllt werden mit Ausnahme des bzw. der Flügel (13,14)
f) Entnahme des Positionssensors (1,21) nach dem Erhärten der Formmasse (2) aus der Form (31)
g) Entfernen des bzw. der aus der Formmasse (2) abstehenden Flügel (13,14) des Sensorelementträgers (5).

2. Verfahren nach Anspruch 1, **dadurch gekennzeichnet,**
**daß** die Innenseite der Form (31) ein Gewinde aufweist, so **daß** beim Preßvorgang in die Oberfläche der Formmasse (2) des Positionssensors (1,21) ein Gewinde (3) eingepreßt wird.

3. Verfahren zur Herstellung eines Positionssensors (1,21) mit einem Kabel (9) zum Zuführen von elektrischer Energie und Herausführen der Signale des Sensorelements (6), nach Anspruch 1,
**dadurch gekennzeichnet,**
**daß** das Formvolumen (32) der Form (31) ein zylindrisches Volumen umschließt, so daß beim Preßvorgang ein zylindrischer Positionssensors (1,21) erzeugt wird, und die Flügel (13,14) des Sensorelementträgers (5) radial von demselben abstehen, wobei innerhalb der Form (31) an einem Ende der Platine (4) der Sensorelementträger (5) mitsamt dem Sensorelement (6) und am entgegengesetzten Ende das Anschlußelement (7) in den entsprechenden Aussparungen (32,33,34,35) der Form (31) positioniert werden, wobei das Anschlußelement (7) auf das wegführende Kabel (9) aufgesetzt ist.

4. Verfahren nach einem der vorhergehenden Ansprüche,
**dadurch gekennzeichnet,**
**daß** die elektrische Versorgungsenergie des Positionssensors (1,21) und die abgehenden Daten des Sensorelements (6) entweder galvanisch mittels eines Kabels (9) oder einer Steckverbindung oder als von einem elektromagnetischen Empfänger aufgenommener elektromagnetischer Strahlungsenergie und von einem Sender abgegebener Daten in Form von elektromagnetischer Strahlung übermittelt werden.

5. Verfahren nach einem der vorhergehenden Ansprüche,
**dadurch gekennzeichnet,**
**daß** die duroplastische Formmasse (2) des Positionssensors (1,21) in einem Arbeitsgang innerhalb der Form (31) einstückig gespritzt wird.

6. Verfahren nach einem der vorhergehenden Ansprüche,
**dadurch gekennzeichnet,**
**daß** zuerst die Platine (4) auf den Sensorelementträger (5) mitsamt dem Sensorelement (6) aufgesetzt sowie das Anschlußelements (7,8,9) an der Platine (4) montiert wird und anschließend diese Einheit aus Platine (4), Sensorelementträger (5), Sensorelement (6) und Anschlußelement (7,8,9) in der Form (31) positioniert wird.

7. Positionssensor (1,21), umfassend eine auf einer Platine (4) angeordnete elektrische Schaltung, welche mit einem Sensorelement (6) elektrisch verbunden ist sowie ein mit der Platine (4) verbundenes elektrisches Anschlußelement (7,8,9) aufweist zum Zuführen von elektrischer Energie und Herausführen der Signale des Sensorelements (6), **dadurch gekennzeichnet,**
**dass** das Sensorelement (6) auf einem Sensorelementträger (5) angeordnet ist, welcher wenigstens einen abstehenden Flügel (13,14) aufweist, und der Sensorelementträger (5) mit der Platine (4) verbunden ist und diese an einem Ende haltert, und Platine (4), Sensorelement (6) und Sensorelementträger (5) vollständig sowie das Anschlußelement (7,8,9) wenigstens teilweise von einer duroplastischen Formmasse (2) gehäuselos umhüllt sind, aus der unmittelbar nach der Fertigstellung der bzw. die Flügel (13,14) hervorstehen, welche anschließend entfernbar sind.

8. Positionssensor (1,21) nach Anspruch 7, **dadurch gekennzeichnet,**
**daß** in die Oberfläche der Formmasse (2) ein Gewinde (3) eingeformt ist.

9. Positionssensor (1,21) mit einem Kabel (9) zum Zuführen von elektrischer Energie und Herausführen der Signale des Sensorelements (6), nach Anspruch 7, **dadurch gekennzeichnet,**
**daß** derselbe zylindrisch geformt ist, wobei an einem Ende der Platine (4) der Sensorelementträger (5) mitsamt dem Sensorelement (6) und am entgegengesetzten Ende das Anschlußelement positioniert sind, welches als Dichtkörper (7) ausgeführt und vom wegführenden Kabel (9) durchsetzt ist.

10. Positionssensor (1,21) nach Anspruch 9, **dadurch gekennzeichnet,**
**daß** der Sensorelementträger (5) als runde Scheibe gestaltet ist und auf einer der Hauptoberflächen (25) eine peripher umlaufende Ringwandung (15) aufweist, und auf dieser Hauptoberfläche (25) zentrisch ein Mittenzapfen (16) zur Aufnahme und Zentrierung einer Spule (6) des Sensorelements angeordnet ist, wobei auf der gegenüberliegenden Hauptoberfläche (25') Halterungselemente (17,18) zur Halterung der Platine (4) während des Preßvorganges der duroplastischen Formmasse (2) innerhalb der Form angeordnet sind.

11. Positionssensor (1,21) nach Anspruch 9, **dadurch gekennzeichnet,**
**daß** der Dichtkörper aus einem transluziden Material besteht und ein nach innen weisendes Sackloch (23) aufweist, in welches eine Leuchtdiode (8) eingesetzt ist, welche mit der Platine (4) elektrisch in Verbindung steht.

12. Positionssensor (1,21) nach einem der Ansprüche 7 bis 11,
**dadurch gekennzeichnet,**
**daß** auch das Anschlußelement (7) bzw. der Dichtkörper (7) Halterungen (24,24') aufweist, zwischen denen die Platine (4) mittels gesteckter Verbindung während des Preßvorganges der duroplastischen Formmasse (2) innerhalb der Form gehaltert ist.

13. Positionssensor (1,21) nach Anspruch 9, **dadurch gekennzeichnet,**
**daß** die Flügel (13,14) des Sensorelementträger (5) radial nach außen abstehen und Sollbruchstellen (26,26') aufweisen.

14. Positionssensor (1,21) nach Anspruch 13, **dadurch gekennzeichnet,**
**daß** die duroplastische Formmasse (2) des Positionssensors (1,21) einstückig ist.

## Claims

1. A process for the production of a position sensor (1, 21) comprising an electric circuit arranged on a printed circuit board (4), a sensor element (6) as well as an electric connection element (7, 8, 9) to supply electric power and to emit the signals of the sensor element (6), **characterized by** the following steps:
a) placing the sensor element (6) on a sensor element carrier (5), which has at least one protruding wing (13, 14),
b) placing the sensor element carrier (5) along with the sensor element (6) onto the printed circuit board (4) and electrically connecting the sensor element (6) as well as the connection element (7, 8, 9) to the printed circuit board (4),
c) positioning the sensor element carrier (5) along with the printed circuit board (4) in a multi-cavity mold (31) whose mold cavity (32, 33, 34, 35) has the external dimensions of the position sensor (1, 21), thereby
c1) positioning the wing or wings (13, 14) of the sensor element carrier (5) into recesses (34, 35) of the mold that are shaped like the wings (13, 14) and that project over the cavity (32) of the mold (31), thus positioning the sensor element carrier (5) along with the sensor element (6) and with the printed circuit board (4) in the mold (31),
d) positioning the connection element (7, 8, 9) inside the mold (31) in a recess (33) of the mold (31) intended for this purpose,
e) injecting the mold (31) with a thermosetting molding compound (2), whereby the printed circuit board (4), the sensor element (6) and the sensor element carrier (5) are completely surrounded and the connection element (7, 8, 9) is at least partially surrounded by the molding compound (2), except for the wing or wings (13, 14),
f) removing the position sensor (1, 21) from the mold (31) after the molding compound (2) has hardened,
g) removing the wing or wings (13, 14) of the sensor element carrier (5) that protrude from the molding compound (2).

2. The process according to Claim 1, **characterized in that**
the inside of the mold (31) has a thread so that, during the compression procedure, a thread (3) is pressed into the surface of the molding compound (2) of the position sensor (1, 21).

3. The process for the production of a position sensor (1, 21) with a cable (9) to supply electric power and to emit the signals of the sensor element (6) according to Claim 1, **characterized in that**
the cavity (32) of the mold (31) encloses a cylindrical volume so that, during the compression procedure, a cylindrical position sensor (1, 21) is created, and the wings (13, 14) of the sensor element carrier (5) protrude radially therefrom, whereby, inside the mold (31) at one end of the printed circuit board (4), the sensor element carrier (5) along with the sensor element (6) and, at the opposite end, the connection element (7), are all positioned in the corresponding recesses (32, 33, 34, 35) of the mold (31), whereby the connection element (7) is mounted onto the outgoing cable (9).

4. The process according to one of the preceding claims, **characterized in that**
the electric power supply of the position sensor (1, 21) and the outgoing data of the sensor element (6) are transmitted either galvanically by means of a cable (9) or by a plugged connection or else as electromagnetic radiation energy picked up by an electromagnetic receiver and emitted by a transmitter in the form of electromagnetic radiation.

5. The process according to one of the preceding claims, **characterized in that**
the thermosetting molding compound (2) of the position sensor (1, 21) is injected in one piece inside the mold (31) in one work step.

6. The process according to one of the preceding claims, **characterized in that**,
first the printed circuit board (4) is placed onto the sensor element carrier (5) along with the sensor element (6) and the connection element (7, 8, 9) is mounted onto the printed circuit board (4), and subsequently this unit comprising the printed circuit board (4), the sensor element carrier (5), the sensor element (6) and the connection element (7, 8, 9) is positioned in the mold (31).

7. A position sensor (1, 21) comprising an electric circuit that is arranged on a printed circuit board (4) and that is electrically connected to a sensor element (6) as well as an electric connection element (7, 8, 9) connected to the printed circuit board (4) to supply electric power and to emit the signals of the sensor element (6),
**characterized in that**
the sensor element (6) is arranged on a sensor element carrier (5) that has at least one protruding wing (13, 14), and the sensor element carrier (5) is connected to the printed circuit board (4) and holds it at one end, and the printed circuit board (4), the sensor element (6) and the sensor element carrier (5) are completely surrounded and the connection element (7, 8, 9) is at least partially surrounded by a molding compound (2) without a housing, from which molding compound (2) the wing or wings (13, 14) protrude immediately after the production and can subsequently be removed.

8. The position sensor (1, 21) according to Claim 7, **characterized in that**
a thread (3) is formed into the surface of the molding compound (2).

9. The position sensor (1, 21) with a cable (9) to supply electric power and to emit the signals of the sensor element (6), according to Claim 7, **characterized in that**
said position sensor (1, 21) is cylindrically shaped, whereby the sensor element carrier (5) along with the sensor element (6) are positioned at one end of the printed circuit board (4) and the connection element is positioned at the opposite end, said connection element being configured as a sealing element (7) and being penetrated by the outgoing cable (9).

10. The position sensor (1, 21) according to Claim 9, **characterized in that**
the sensor element carrier (5) is configured as a round disk and, on one of the main surfaces (25), has a peripherally encircling ring wall (15) and, in the center of this main surface (25), it has a middle journal (16) to hold and center a coil (6) of the sensor element, whereby on the opposite main surface (25'), there are holding elements (17, 18) to hold the printed circuit board (4) inside the mold during the compression procedure of the thermosetting molding compound (2).

11. The position sensor (1, 21) according to Claim 9, **characterized in that**
the sealing element is made of a translucent material and it has a blind hole (23) facing inwards into which a light diode (8) has been inserted, which is electrically connected to the printed circuit board (4).

12. The position sensor (1, 21) according to one of Claims 7 to 11, **characterized in that**
the connection element (7) or the sealing element (7) has holders (24, 24') between which the printed circuit board (4) is held inside the mold by means of a plugged connection during the compression procedure of the thermosetting molding compound (2).

13. The position sensor (1, 21) according to Claim 9, **characterized in that**
the wings (13, 14) of the sensor element carrier (5) have predetermined break lines (26, 26') that protrude radially outwards.

14. The position sensor (1, 21) according to Claim 13, **characterized in that**
the thermosetting molding compound (2) of the position sensor (1, 21) consists of a single piece.

## Revendications

1. Méthode de fabrication d'un palpeur de position (1, 21) comprenant un circuit électrique disposé sur une platine (4), un élément palpeur (6), ainsi qu'un élément de raccordement électrique (7, 8, 9) pour l'apport d'énergie électrique et la sortie des signaux de l'élément palpeur (6),
**caractérisée par** les étapes suivantes :
a) mise en place de l'élément palpeur (6) sur un support d'élément palpeur (5) qui possède au moins une aile saillante (13,14)
b) mise en place du support d'élément palpeur (5) avec l'élément palpeur (6) sur la platine (4) et raccordement électrique de l'élément palpeur (6), ainsi que de l'élément de raccordement (7, 8, 9) avec la platine (4)
c) positionnement du support d'élément palpeur (5) avec la platine (4) dans un moule (31) en plusieurs parties dont le volume de moulage (32, 33, 34, 35) présente les dimensions extérieures du palpeur de position (1, 21), ce faisant,
c1) positionnement de l'aile ou des ailes (13, 14) du support d'élément palpeur (5) dans des réserves (34, 35) du moule formées conformément aux ailes (13, 14) et qui sont proéminentes par rapport au volume de moulage (32) et de ce fait, positionnement du support d'élément palpeur (5) avec l'élément palpeur (6) et la platine (4) dans le moule (31)
d) positionnement de l'élément de raccordement (7, 8, 9) à l'intérieur du moule (31), dans une réserve (33) du moule (31) prévue à cet effet.
e) remplissage par injection du moule (31) avec une matière à mouler thermodurcissable (2), la platine (4), l'élément palpeur (6) et le support d'élément palpeur (5) étant entièrement enrobés par la matière à mouler (2) à l'exception de l'aile ou des ailes (13, 14) et l'élément de raccordement (7, 8, 9) l'étant tout au moins partiellement.
f) retrait du palpeur de position (1, 21) après le durcissement de la matière à mouler (2) en dehors du moule (31).
g) élimination de l'aile ou des ailes saillantes (13, 14) du support d'élément palpeur (5) en dehors de la matière à mouler (2).

2. Méthode selon la revendication 1, **caractérisée en ce que**
le côté intérieur du moule (31) présente un taraudage, de sorte que, au cours du processus de moulage, un taraud (3) est empreint dans la surface de la matière a mouler (2) du palpeur de position (1, 21).

3. Méthode de fabrication d'un palpeur de position (1, 21) avec un câble (9) pour l'apport d'énergie électrique et la sortie des signaux d'un élément palpeur (6), d'après la revendication 1,
**caractérisé en ce que**
le volume de moulage (32) du moule (31) confine un volume cylindrique, de sorte qu'est produit au cours du processus de moulage un palpeur de position cylindrique (1, 21) et que les ailes (13, 14) du support d'élément palpeur (5) sont radialement en saillie par rapport à ce dernier, le support d'élément palpeur (5) avec l'élément palpeur (6) étant positionné à l'intérieur du moule (31) à l'une des extrémités de la platine (4) et l'élément de raccordement (7) à l'extrémité opposée, dans les réserves respectives (32, 33, 34, 35) du moule (31), l'élément de raccordement (7) étant placé sur le câble de sortie (9).

4. Méthode selon l'une quelconque des revendications précédentes,
**caractérisée en ce que**
l'énergie d'alimentation électrique du palpeur de position (1, 21) et les informations à la sortie de l'élément palpeur (6) sont transmises ou bien par voie galvanique au moyen d'un câble (9) ou d'un raccord à fiches, ou bien sous forme de rayonnement électromagnétique en tant qu'énergie de rayonnement électromagnétique reçue par un récepteur électromagnétique et sous forme d'informations émises par un émetteur sous forme de rayonnement électromagnétique.

5. Méthode selon l'une quelconque des revendications précédentes,
**caractérisée en ce que**
la matière à mouler thermodurcissable (2) du palpeur de position (1, 21) est injectée d'un seul tenant en une opération de travail à l'intérieur du moule (31).

6. Méthode selon l'une quelconque des revendications précédentes,
**caractérisée en ce que**
d'abord la platine (4) est mise en place sur le support d'élément palpeur (5) avec l'élément palpeur (6), de même que l'élément de raccordement (7, 8, 9) est monté sur la platine (4) et qu'ensuite, cette unité constituée par la platine (4), le support d'élément palpeur (5), l'élément palpeur (6) et l'élément de raccordement (7, 8, 9) est positionnée dans le moule (31).

7. Palpeur de position (1, 21) comprenant un circuit électrique disposé sur une platine (4), ledit circuit étant relié électriquement à un élément palpeur (6) et présentant aussi un élément de raccordement (7, 8, 9) pour l'apport d'énergie électrique et la sortie des signaux de l'élément palpeur (6), **caractérisé en ce que**
l'élément palpeur (6) est disposé sur un support d'élément palpeur (5) qui présente au moins une aile (13, 14) saillante et que le support d'élément palpeur (5) est relié à la platine (4) et supporte celle-ci à l'une des extrémités, et que la platine (4), l'élément palpeur (6) et le support d'élément palpeur (5) sont entièrement enrobés sans boîtier, ainsi que l'élément de raccordement (7, 8, 9) tout au moins partiellement, d'une matière à mouler thermodurcissable (2) de laquelle l'aile ou les ailes (13, 14) font saillie immédiatement après la fabrication et peuvent être enlevées par la suite.

8. Palpeur de position (1, 21) selon la revendication 7, **caractérisé en ce que**
un taraudage (3) est empreint dans la surface de la matière de moulage (2).

9. Palpeur de position (1, 21) avec un câble (9) pour l'apport d'énergie électrique et la sortie des signaux de l'élément palpeur (6), selon la revendication 7, **caractérisé en ce que**
ledit palpeur de position est conformé cylindriquement, le support d'élément palpeur (5) avec l'élément palpeur (6) étant positionnés à l'une des extrémités de la platine (4) et l'élément de raccordement à l'extrémité opposée, cet élément étant exécuté en tant que corps d'étanchéité (7) et traversé par le câble de sortie (9).

10. Palpeur de position (1, 21) selon la revendication 9, **caractérisé en ce que** le support d'élément palpeur (5) est conformé en un disque rond et présente sur l'une des surfaces principales (25) une paroi annulaire (15) faisant le pourtour à la périphérie et **en ce que** sur cette surface principale (25) est placé un tourillon médian (16) centré pour la réception et le centrage d'une bobine (6) de l'élément palpeur, alors que sur la surface principale opposée (25') sont disposés des éléments de support (17, 18) pour la fixation de la platine (4) pendant le processus de moulage de la matière à mouler thermodurcissable (2) à l'intérieur du moule.

11. Palpeur de position (1, 21) selon la revendication 9, **caractérisé en ce que** le corps d'étanchéité consiste en un matériau translucide et présente un trou borgne (23) dirigé vers l'intérieur dans lequel est placée une diode luminescente (8) qui est reliée électriquement à la platine (4).

12. Palpeur de position (1, 21) selon l'une quelconque des revendications 7 à 11, **caractérisé en ce que**
également l'élément de raccordement (7) ou le corps d'étanchéité (7) présente des fixations (24, 24') entre lesquelles la platine (4) est maintenue au moyen d'un raccord enfichable pendant le processus de moulage de la matière à mouler thermodurcissable (2) à l'intérieur du moule.

13. Palpeur de position (1, 21) selon la revendication 9, **caractérisé en ce que** les ailes (13, 14) du support d'élément palpeur (5) font radialement saillie vers l'extérieur et présentent des points destinés à la rupture (26, 26').

14. Palpeur de position (1, 21) selon la revendication 13, **caractérisé en ce que** la matière à mouler thermodurcissable (2) du palpeur de position (1, 21) est d'un seul tenant.
